# EUROPÄISCHE PATENTSCHRIFT

(11) **EP 0 718 563 B1**
(45) Veröffentlichungstag und Bekanntmachung des Hinweises auf die Patenterteilung: **19.05.1999**
(21) Anmeldenummer: 95119282.2
(22) Anmeldetag: 07.12.1995
(51) Int. Cl.: F24D 19/08, G05D 23/02

(54) **Ventil für Heizungs-, Warmwasser- oder Kühlanlagen**
Valve for heating, hot water or cooling installations
Valve pour installations de chauffage, de production d'eau chaude ou de réfrigération

(30) Priorität: 21.12.1994 DE 9420412 U
(43) Veröffentlichungstag der Anmeldung: 26.06.1996
(73) Patentinhaber: METALLWERKE NEHEIM GOEKE & Co. GmbH, 59755 Arnsberg (DE)
(72) Erfinder: Letzel, Helmut Ing., D-59755 Arnsberg (DE)
(74) Vertreter: Herzbach, Dieter, Dipl.-Ing.

(56) Entgegenhaltungen:
- DE-A- 4 106 278
- DE-U- 9 404 344

## Beschreibung

Die Erfindung betrifft ein Ventil für Heizungs-, Warmwasser- oder Kühlanlagen, bei dem an einem Gehäuse ein Anschlußstützen zum Strang, ein Anschlußstutzen zum Verbraucher und ein Schraubstutzen zur Aufnahme eines Ventiloberteiles mit einem an einer hohlen Ventilspindel angeordneten ersten Verschlußstück, welches mit einem Ventilsitz im Gehäuse eine drosselartige Voreinstellung für den Durchfluß bildet, vorgesehen sind und in der hohlen Ventilspindel ein von außen gegen den Druck einer Feder betätigbares zweites hohles, doppelwirkendendes Ventilverschlußstück gegenüber einem entsprechenden Ventilsitz in der Ventilspindel von außen verschiebbar ist zur Entleerung eines Stranges über die Ventilspindel, wobei dieses zweite Ventilverschlußstück mit seinem dem Entleerungsventilsitz gegenüberliegenden Ende durch das erste Ventilverschlußstück hindurch in Richtung auf den Gehäuseventilsitz verschiebbar ist.

Bekannt ist ein solches Ventil für eine Heizungsanlage aus der DE-OS 41 06 278. Diese Heizungsventile sind mit einem Druckregler kombinierbar. Diese Ventile besitzen eine Entleerungsfunktion, sie sind als Absperrventil einsetzbar und besitzen eine Voreinstellmöglichkeit, ohne daß das Ventilgehäuse oder das Oberteil zu demontieren sind. Bei der Kombination mit einem Druckregler greift dieser Regler mit einem entsprechenden Betätigungsglied in die hohle Ventilspindel ein und wirkt gegen das zweite Verschlußstück.

Die Aufgabe der Erfindung besteht darin, ein gattungsgemäßes Ventil für Heizungs-, Warmwasser- oder Kühlanlagen auch temperaturgeregelt zu steuern.

Zur Lösung dieser Erfindungsaufgabe wird ein Ventil mit den Merkmalen des Anspruchs 1 vorgeschlagen.

Auf diese Weise kann das gattungsgemäße Ventil ohne Demontage des Oberteiles mit einem Thermostatregler bestückt werden, so daß dieses Ventil zur Temperaturregelung in den jeweiligen Anlagen einsetzbar ist. Zusammen mit einem entsprechenden Oberteil kann der Thermostatregler an dem montierten Gehäuse jeder Zeit eingesetzt werden.

Eine bevorzugte Ausführungsart der Erfindung wird mit den Merkmalen der Ansprüche 4 bis 6 vorgeschlagen. Beansprucht wird damit eine konstruktiv günstige Gestaltung des Thermostatreglers in Verbindung mit der hohlen Ventilspindel.

Mit Anspruch 7 wird eine konstruktiv günstige Ausführung der Ventilspindel gekennzeichnet, die den Montageaufwand eines solchen gattungsgemäßen Ventiles zeigt.

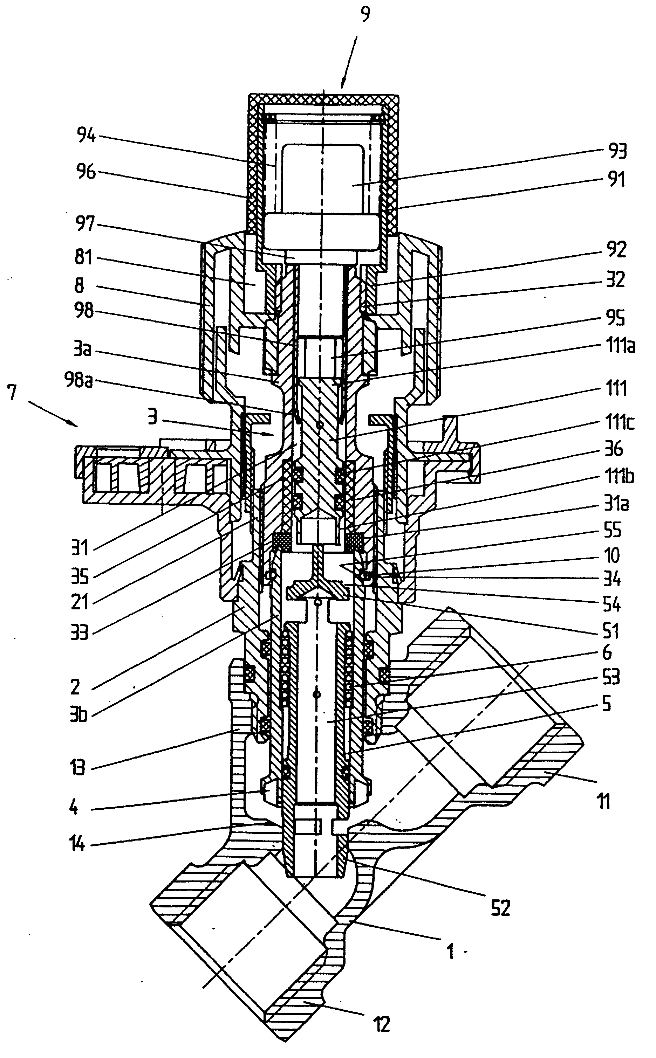

Anhand eines abgebildeten Ausführungsbeispieles wird die Erfindung im folgenden näher erläutert. Die Abbildung zeigt einen Längsschnitt durch ein Heinzungsventil, an dem ein Thermostatregler angeordnet ist in der Öffnungsstellung.

Mit der Ziffer 1 ist in der Abbildung das Gehäuse eines Heizungsventiles bezeichnet. An diesem Gehäuse sind sich gegenüberliegend die Anschlußstutzen 11 und 12 angedeutet, die zum Strang bzw. zum Heizkörper (Verbraucher) führen. Der schräg gerichtete Schraubstutzen 13 dient zur Aufnahme des eingeschraubten Ventiloberteiles 2. Im Inneren des Gehäuses 1 ist ein Ventilsitz 14 ausgebildet, gegen den ein erstes an der hohlen Ventilspindel 3 angeordnetes Verschlußstück 4 wirkt. Im Prinzip bestimmt die Stellung dieses ersten Verschlußstückes 4 zum entsprechenden Ventilsitz 14 die Voreinstellung für den Durchfluß. Mit diesem ersten Verschlußstück 4 ist das Heizungsventil absperrbar.

Die insgesamt mit der Ziffer 3 bezeichnete hohle Ventilspindel ist zweiteilig ausgebildet. Dabei ist der untere Spindelabschnitt 3b in den oberen Spindelabschnitt 3a eingesteckt und mit einer Rast- oder einer Schnappverbindung gehalten. Ein Sprengring 10 greift in die Nut 34 am oberen Spindelabschnitt 3a und in die gegenüberliegende Nut 55 am unteren Spindelabschnitt 3b ein. In einem Absatz 31a im Inneren des oberen Spindelabschnittes 3a ist eine elastische Flachdichtung 33 eingesetzt, beispielsweise aus einem Elastomer. Mit Vorspannung beim Einrasten der Schnapp- bzw. Rastverbindung 34, 10, 55 greift der untere Spindelabschnitt 3b mit seiner Stirnseite abdichtend in diese Flachdichtung 33 ein, die wiederum aufgrund ihrer elastischen Rückstellkraft die Rast- bzw. Schnappverbindung in axialer Richtung sichert.

Diese Flachdichtung 33 ragt in das Innere der beiden hohlen Spindelabschnitte 3a, 3b hinein. Im Hohlraum 31 des unteren Spindelabschnittes 3b ist ein zweites Verschlußstück 5 gegen den Druck einer Rückstellfeder 6 von außen verschiebbar. Diese Rückstellfeder 6 stützt sich mit einem Ende im Inneren des unteren Spindelabschnittes 3b ab. Dieses zweite Verschlußstück ist doppelwirkend. Bei entsprechender Stellung aufgrund der Rückstellfeder 6 wirkt das obere Verschlußstückende 51 gegen die nach innen ragende Flachdichtung 33.

Das gegenüberliegende Verschlußstückende 52 des zweiten Verschlußstückes 5 ragt durch den unteren Spindel abschnitt 3b nach außen hindurch und bildet mit dem hindurchragenden Abschnitt die Kontur des ersten Verschlußstückes 4 und bestimmt mit diesem den Drosselspalt.

Eine eingesetzte, nicht dargestellte Entleerungsvorrichtung wirkt durch den Hohlraum 31 des oberen Ventilspindelabschnittes 3a auf das obere Verschlußstückende 51. Nach Abheben des zweiten Verschlußstückes 5 mit seinem oberen Verschlußstückende 51 und der daran im äußeren Bereich umlaufend ausgebildeten Nut 54 von der Flachdichtung 33 strömt Wasser aus dem Strang oder dem Heizkörper durch die hohle Ventilspindel nach außen.

An dem aus dem Ventiloberteil 2 herausragenden Ende der zweiteiligen Ventilspindel 3 ist auf einer Drehmitnahme eine Schraubkappe 8 drehbar aufgesetzt. Die Voreinstellung erfolgt nach Abnahme der Schraubkappe 8. Dabei wird die Ventilspindel 3 nicht bewegt. Danach erfolgt eine entsprechende Verdrehung der insgesamt mit der Ziffer 7 bezeichneten Anzeigevorrichtung.

Durch den Absatz 81 der Schraubkappe 8 ist der insgesamt mit der Ziffer 9 bezeichnete Thermostatregler auf der hohlen Ventilspindel 3 aufgesetzt. Dabei ist der an dem Gehäuse 91 vorgesehene Gewindestutzen 92 auf den Außengewindeabschnitt 32 des oberen Spindelabschnittes 3a abgedichtet aufgeschraubt. In diesem Thermostatgehäuse 91 ist ein Dehnstoffelement 93 aufgenommen, welches gegen eine Überhubfeder 94 verschiebbar ist. Bei alleiniger Wirkung der Überhubfeder 94 liegt das Dehnstoffelement 93 mit einem Bund 97 auf der Ventilspindel 3 auf. Der Kolben 95 des Dehnstoffelementes 93 ragt in die hohle Ventilspindel 3 bzw. deren oberen Spindelabschnitt 3a hinein und wirkt gegen ein zylinderförmiges, hohles Betätigungsglied 111, welches seinerseits mit seinem offenen Ende 111b gegen das zweite Verschlußstück 5 anliegt. Das obere geschlossene Ende 111a dieses Betätigungsgliedes 111 ist begrenzt verschiebbar in einer Begrenzungshülse 98 geführt, welches am Dehnstoffelement 93 festgesetzt ist. Das untere Ende 98a dieser Begrenzungshülse ist nach innen eingezogen, so daß in der Endstellung das Betätigungsglied 111 mit einem Außenbund am geschlossenen Ende 111a gegen dieses eingezogene Ende 98a anschlägt. Das Betätigungsglied 111 ist in einer Kunststoffgleitbuchse 36 geführt und mit den Ringdichtungen 111c abgedichtet. Die Kunststoffgleitbuchse 36 ist bündig in einen Absatz 35 im Inneren des oberen Spindelabschnittes 3a eingesetzt.

Durch den Hohlraum 53 im zweiten Verschlußstück 5 eindringendes Wasser gelangt in das Betätigungsglied 111 und erwärmt über den Kolben 95 das Dehnstoffelement 93, welches entsprechend gegen den Hub der Feder 94 abhebt. Zur Isolation ist das Thermostatgehäuse 91 mit einem Mantel 96 umgeben. Über den Thermostatregler 9 wird der Abstand des ersten Verschlußstückes 4 vom gehäuseseitigen Ventilsitz 14 bestimmt.

Beim Aufschrauben des Gehäuses 91 des Thermostatreglers 9 liegt das Dehnstoffelement 93 mit seinem Bund 97 auf dem oberen Ventilspindelabschnitt 3a auf. Dadurch ist eine genaue Justierung zwischen der Auflagekante und dem Ende des Betätigungsgliedes 111 möglich. Im aufgeschraubten Zustand schiebt sich das Dehnstoffelement 93 geringfügig in Richtung der Überhubfeder 94, so daß Fertigungs- und Aufschraubtoleranzen des Gehäuses 91 keinen Einfluß auf die Temepraturjustierung haben.

Nach Abnahme des Thermostatreglers 9 ist mit einer nicht dargestellten Entleerungsvorrichtung die Entleerung durch den Hohlraum 31 des oberen Ventilabschnittes 3a möglich. Nach Abheben des zweiten Verschlußstückes mit seinem oberen Verschlußstückende 51 und der daran im äußeren Bereich umlaufend ausgebildeten Nut 54 von der Flachdichtung 33 strömt Wasser aus dem Strang oder dem Heizkörper durch die hohle Ventilspindel 3 nach außen.

Das dargestellte Ventil kann in gleicher Weise für Warmwasser- oder Kühlanlagen eingesetzt werden, wobei der Strang zum Verbraucher bei einer Kühlanlage zum Wärmetauscher und bei einer Warmwasseranlage zum Warmwassererzeuger führt.

### Zusammenstellung der Bezugszeichen

- 1: Ventilgehäuse
- 11: Anschlußstutzen
- 12: Anschlußstutzen
- 13: Schraubstutzen
- 14: Ventilsitz

- 2: Ventiloberteil
- 21: Abschnitt

- 3: Ventilspindel
- 3a: oberer Spindelabschnitt
- 3b: unterer Spindelabschnitt
- 31: Hohlraum
- 31a: Innenabsatz
- 32: Außengewindeabschnitt
- 33: Dichtung
- 34: Nut
- 35: Absatz
- 36: Kunststoffgleitbuchse

- 4: erstes Verschlußstück

- 5: zweites Verschlußstück
- 51: Verschlußstückende
- 52: Verschlußstückende
- 53: Hohlraum
- 54: Nut
- 55: Nut

- 6: Feder

- 7: Anzeigevorrichtung

- 8: Schraubkappe
- 81: Absatz

- 9: Thermostatregler
- 91: Gehäuse
- 92: Gewindestutzen
- 93: Dehnstoffelement
- 94: Überhubfeder
- 95: Kolben
- 96: Isolierung
- 97: Bund
- 98: Begrenzungshülse
- 98a: eingezogenes Ende

- 10: Sprengring

- 111: Betätigungsglied
- 111a: geschlossenes Ende
- 111b: offenes Ende
- 111c: Dichtring

## Patentansprüche

1. Ventil für Heizungs-, Warmwasser- oder Kühlanlagen, bei dem an einem Gehäuse ein Anschlußstutzen zum Strang, ein Anschlußstutzen zum Verbraucher und ein Schraubstutzen zur Aufnahme eines Ventiloberteiles mit einem an einer hohlen Ventilspindel angeordneten ersten Verschlußstück, welches mit einem Ventilsitz im Gehäuse eine drosselartige Voreinstellung für den Durchfluß bildet, vorgesehen sind und in der hohlen Ventilspindel ein von außen gegen den Druck einer Feder betätigbares zweites hohles, doppelwirkendes Ventilverschlußstück gegenüber einem entsprechenden Ventilsitz in der Ventilspindel von außen verschiebbar ist zur Entleerung eines Stranges über die Ventilspindel, wobei dieses zweite Ventilverschlußstück mit seinem dem Entleerungsventilsitz gegenüberliegenden Ende durch das erste Ventilverschlußstück hindurch in Richtung auf den Gehäuseventilsitz verschiebbar ist, **dadurch gekennzeichnet**, daß auf die Ventilspindel (3, 3a) ein Thermostatregler (9) mit seinem Gehäuse (91) aufgeschraubt ist mit einem gegen eine Überhubfeder (94) wirkenden Dehnstoffelement (93), dessen Kolben (95) gegen das zweite Verschlußstück (5) wirkt.

2. Ventil nach Anspruch 1, **dadurch gekennzeichnet**, daß in der hohlen Ventilspindel (3, 3a) abgedichtet ein zylindrisches hohles Betätigungsglied (111) geführt ist, auf dessen geschlossenem Ende (111a) der Kolben (95) des Dehnstoffelementes (93) aufsitzt und dessen anderes offenes Ende (111b) gegen das zweite Verschlußstück (5) wirkt.

3. Ventil nach Anspruch 2, **dadurch gekennzeichnet**, daß das Betätigungsglied (111) in einer Kunststoffgleitbuchse (36) geführt ist, die in einem Absatz (35) in der Ventilspindel (3, 3a) zum Innendurchmesser der Ventilspindel (3, 3a) bündig eingesetzt ist.

4. Ventil nach Anspruch 1, **dadurch gekennzeichnet**, daß das Thermostatgehäuse (91) mit einem Gewindestutzen (92) auf einen Außengewindeabschnitt (32) der Ventilspindel (3, 3a) aufgeschraubt ist.

5. Ventil nach einem oder mehreren der vorangegangenen Ansprüche, **dadurch gekennzeichnet** daß am kolbenseitigen Ende des Dehnstoffelementes (93) eine Begrenzungshülse (98) angeordnet ist, in der das Betätigungsglied (111) begrenzt verschiebbar gehalten ist.

6. Ventil nach Anspruch 5, **dadurch gekennzeichnet**, daß die Begrenzungshülse (98) ein nach innen eingezogenes Ende (98a) aufweist und am geschlossenen Ende (111a) des Betätigungsgliedes (111) ein Außenbund als Anschlag vorgesehen ist.

7. Ventil nach einem oder mehreren der vorangegangenen Ansprüche, **dadurch gekennzeichnet**, daß die hohle Ventilspindel (3) aus einem oberen und einem unteren Ventilspindelabschnitt (3a, 3b) besteht, die ineinander gesteckt durch eine Rastverbindung gehalten sind, wobei innen zwischen den beiden Spindelabschnitten (3a, 3b) zur Abdichtung und zur Ausbildung eines Ventilsitzes für das zweite Verschlußstück (5) eine Dichtung (33) angeordnet ist.

## Claims

1. Valve for heating, hot water or cooling installations, at which there are provided on a housing a pipe union for connection to the line, a pipe union for connection to a consuming device and a screw socket for receiving an upper valve portion with a first closure member which is disposed on a hollow valve spindle and forms with a valve seat in the housing a throttle-like preset device for the throughflow. and a hollow double-acting second valve closure member which is actuable externally in opposition to the pressure of a spring with respect to an according valve seat in the valve spindle for the discharge of a line via the valve spindle, whereat this second valve closure member with its end opposite to the discharge valve seat is displaceable through the first valve closure member in a direction to the housing valve seat, **characterized in that** a thermostat controller (9) with its housing (91) is threaded onto the valve spindle (3,3a) having an expansion element (93) acting against a compression spring (94) and the piston (95) of which is acting against the second closure member (5).

2. Valve according to claim 1, **characterized in that** sealed within the hollow valve spindle (3,3a) a cylindrical actuating member (111) is guided, on the closed end (111a) of which the piston (95) of the expansion element (93) is seated and the other open end (111b) of which is acting against the second closure member (5).

3. Valve according to claim 2, **characterized in that** the actuating element (111) is guided within a sliding sleeve (36) from plastics. which is inserted into a recess (35) within a valve spindle (3,3a) to be flush with the inner diameter of the valve spindle (3,3a).

4. Valve according to claim 1, **characterized in that** the thermostat housing (91) is threaded with a threaded stud (92) onto an external thread section (32) of the valve spindle (3,3a).

5. Valve according to one or a plurality of the preceding claims, **characterized in that** at the piston side end of the expansion element (93) a limiter sleeve (98) is arranged in which the actuating member (111) is hold to be displaceable in a limited manner.

6. Valve according to claim 5, **characterized in that** the limiter sleeve (98) comprises an inwardly recessed end (98a) and that at the closed end (111a) of the actuating member (111) an outer collar is provided as an abutment.

7. Valve according to one or a plurality of the preceding claims, **characterized in that** the hollow valve spindle (3) consists of an upper and a lower valve spindle section (3a,3b), which are plugged into each other and are secured by a click-stop arrangement, whereat at the inner side between both valve spindle sections (3a,3b) for sealing and forming of a valve seat for the second closure member (5) a gasket (33) is arranged.

## Revendications

1. Vanne pour installations de chauffage, de production d'eau chaude ou de réfrigération, dans laquelle sont prévus, sur un corps, un embout de raccordement à la conduite de distribution, un embout de raccordement à l'appareil utilisateur et un embout à pas de vis destiné à recevoir une partie supérieure de vanne comportant une première pièce d'obturation qui est disposée sur une broche de vanne creuse et qui, avec un siège de vanne formé dans le corps, établit un pré-réglage par étranglement pour le débit. tandis que dans la broche de vanne creuse, une seconde pièce d'obturation de vanne, creuse, à double effet et actionnable de l'extérieur à l'encontre de la poussée d'un ressort, est déplaçable de l'extérieur, par coulissement, par rapport à un siège de vanne correspondant formé dans la broche de vanne, pour vidanger une conduite de distribution par l'intermédiaire de la broche de vanne, cette seconde pièce d'obturation de vanne étant alors, par son extrémité opposée au siège de vanne servant à la vidange, déplaçable par coulissement à travers la première pièce d'obturation de vanne, en direction du siège de vanne prévu sur le corps, caractérisée en ce que, sur la broche de vanne (3, 3a), est rapporté par vissage, par son boîtier (91), un régulateur à thermostat (9) comportant un élément en matériau dilatable (93) qui agit en opposition à un ressort de dépassement de course (94) et dont le piston (95) agit contre la seconde pièce d'obturation (5).

2. Vanne selon la revendication 1, caractérisée en ce que, dans la broche de vanne creuse (3, 3a), est guidé, sous étanchéité, un organe d'actionnement cylindrique creux (111), sur l'extrémité fermée (111a) duquel s'appuie le piston (95) de l'élément en matériau dilatable (93) et dont l'autre extrémité (111b), ouverte, agit contre la seconde pièce d'obturation (5).

3. Vanne selon la revendication 2, caractérisée en ce que l'organe d'actionnement (111) est guidé dans une douille de glissement en matière plastique (36) qui est insérée dans un renfoncement (35) ménagé dans la broche de vanne (3, 3a), sans former de discontinuité vis-à-vis du diamètre intérieur de la broche de vanne (3, 3a).

4. Vanne selon la revendication 1, caractérisée en ce que le boîtier (91) du thermostat est, par un embout fileté (92), rapporté par vissage sur un tronçon à filetage extérieur (32) de la broche de vanne (3, 3a).

5. Vanne selon une ou plusieurs des revendications précédentes, caractérisée en ce que sur l'extrémité côté piston de l'élément en matériau dilatable (93), est disposé un manchon limiteur (98) dans lequel l'organe d'actionnement (111) est maintenu avec possibilité de coulissement limité.

6. Vanne selon la revendication 5, caractérisée en ce que le manchon limiteur (98) présente une extrémité (98a) repliée vers l'intérieur, et un collet extérieur servant de butée est prévu à l'extrémité fermée (111a) de l'organe d'actionnement (111).

7. Vanne selon une ou plusieurs des revendications précédentes, caractérisée en ce que la broche de vanne creuse (3) est constituée d'un tronçon supérieur et d'un tronçon inférieur de broche de vanne (3a, 3b), qui sont maintenus emboîtés l'un dans l'autre par une jonction encliquetée, un élément d'étanchéité (33) étant alors disposé à l'intérieur, entre les deux tronçons de broche (3a, 3b), pour réaliser une étanchéité et pour constituer un siège de vanne pour la seconde pièce d'obturation (5).
